(19) Europäisches Patentamt
European Patent Office
Office européen des brevets

(11) **EP 3 098 581 B1**

(12) **EUROPÄISCHE PATENTSCHRIFT**

(45) Veröffentlichungstag und Bekanntmachung des Hinweises auf die Patenterteilung:
**23.10.2019 Patentblatt 2019/43**

(51) Int Cl.:
***G01J 3/28*** *(2006.01)*

(21) Anmeldenummer: **16153733.7**

(22) Anmeldetag: **02.02.2016**

(54) **VERFAHREN ZUR KORREKTUR VON UNTERGRUNDSIGNALEN IN EINEM SPEKTRUM**

METHOD FOR CORRECTING BACKGROUND SIGNALS IN A SPECTRUM

PROCEDE DE CORRECTION DE SIGNAUX DE FOND DANS UN SPECTRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.04.2015 DE 102015105239**

(43) Veröffentlichungstag der Anmeldung:
**30.11.2016 Patentblatt 2016/48**

(73) Patentinhaber: **Analytik Jena AG**
**07745 Jena (DE)**

(72) Erfinder: **THAMM, Eike**
**07646 Stadtroda (DE)**

(74) Vertreter: **Koslowski, Christine Adelheid et al**
**Endress+Hauser (Deutschland) AG+Co.KG**
**PatServe**
**Colmarer Strasse 6**
**79576 Weil am Rhein (DE)**

(56) Entgegenhaltungen:
**US-A- 5 910 838     US-A1- 2006 255 249**

• **CHRISTOPHER ROWLANDS ET AL: "Automated algorithm for baseline subtraction in spectra", JOURNAL OF RAMAN SPECTROSCOPY, Bd. 42, Nr. 3, 21. März 2011 (2011-03-21), Seiten 363-369, XP055300828, GB ISSN: 0377-0486, DOI: 10.1002/jrs.2691**

## Beschreibung

### Technisches Gebiet

Die Erfindung betrifft ein Verfahren zur Ermittlung und Korrektur von Untergrundsignalen in einem Spektrum, welches aus Signalen auf einer Vielzahl von spektralen Punkten besteht.

Die Spektralanalyse ist eines der ältesten Verfahren zur Untersuchung von festen, flüssigen oder gasförmigen Substanzen. Es handelt sich um eine fundamentale physikalische Methode, die erfolgreich in vielen Bereichen wie zum Beispiel der Astronomie, der Biologie, der Chemie und der Medizin angewendet wird. Dabei macht man sich zunutze, daß alle Körper mit elektromagnetischer Strahlung wechselwirken. Erscheinungsformen dieser Wechselwirkung sind die Emission, die Absorption, die Streuung und die Reflexion von Strahlung. Vorrichtungen zur Durchführung einer Spektralanalyse heißen Spektrometer.

Jedes Spektrometer besitzt ein dispergierendes Element, durch welches elektromagnetische Strahlung in Anhängigkeit eines physikalischen Parameters unterschiedlich stark beeinflußt wird. Dieser Parameter kann zum Beispiel die Wellenlänge $\lambda$, die Frequenz $v$, oder die Energie $E$ sein. Durch die Beeinflussung wird die Strahlung als Funktion des Parameters aufgefächert und es entsteht ein Spektrum. Dieses Spektrum kann visuell dargestellt, grafisch aufgezeichnet oder mit Mitteln der elektronischen Datenverarbeitung gespeichert werden. Spektrometer werden nach ihrem Aufbau und ihrem Verwendungszweck unterschieden: Wird Materie durch elektrische und magnetische Felder beeinflußt, handelt es sich um Massenspektrometer. Wird elektromagnetische Energie durch materielle Komponenten beeinflußt, so spricht man von optischen Spektrometern. Die beeinflussenden Elemente tragen in beiden Fällen äquivalente Bezeichnungen wie zum Beispiel Ionenlinse/optische Linse, Ionenspiegel/optischer Spiegel. Mit Massenspektrometern identifiziert man Stoffe aufgrund der Eigenschaften ihres Atomkerns, mit optischen Spektrometern identifiziert man Stoffe aufgrund von Prozessen in der Atomhülle. Sofern mit dem Spektrometer Stoffe oder Körper untersucht werden sollen, die selbst keine Emissionsquelle darstellen, besitzt das betreffende Spektrometer eine sogenannte Ionisations- oder Anregungsquelle.

Ein optisches Spektrum ist eine kontinuierliche Verteilung der elektromagnetischen Strahlungsenergie $S$ oder der Intensität $I$ als Funktion der Wellenlänge $\lambda$ oder Frequenz $v$. Charakteristische Merkmale und Strukturen in einem Spektrum erlauben Rückschlüsse auf die Ursache der Strahlung und die Veränderungen, die sie auf ihrem Weg bis zur Detektion im Spektrometer erfahren hat. Die wichtigsten Strukturen in einem Spektrum sind die sogenannten Banden. Dabei handelt es sich um lokale Maxima oder lokale Minima der Signalwerte, z.B. der Strahlungsenergie $S$ oder Intensität $I$ vor einem ansonsten nur schwach oder nicht strukturierten kontinuierlichem Untergrund. Handelt es sich um Maxima, dann spricht man von Emissionsspektren, treten dagegen Minima auf, so handelt es sich um Absorptionsspektren. In der angelsächsichen Literatur werden diese Strukturen als "peaks" bezeichnet.

Ziel einer Spektralanalyse ist es, anhand der Position der Banden im Spektrum und ihrer relativen Stärke ihren Ursprung und daraus wiederum die Zusammensetzung des strahlenden Körpers oder Stoffes im Emissionsspektrum oder durchstrahlten Körpers oder Stoffes im Absorptionsspektrum abzuleiten. Die Qualität der Spektralanalyse steigt mit der Genauigkeit, mit der Position und Stärke einer Bande festgestellt werden können. Dazu ist es erforderlich, den stets vorhandenen spektralen Untergrund so gut wie möglich zu ermitteln, denn jedes Spektrum stellt mathematisch betrachtet eine Linearkombination aus Untergrund, einer oder mehreren Banden, sowie einem Rauschanteil dar.

Das Untergrundsignal in einem Spektrum entsteht durch unterschiedliche Prozesse. Es gibt einen Anteil, der aus der thermischen Strahlung, also einer kontinuierlichen Verteilung der Geschwindigkeiten von Atomen oder Molekülen, des untersuchten Körpers oder Stoffes stammt. Hinzu kommen Anteile, die im Spektrometer selbst entstehen. Dazu zählt insbesondere, aber nicht ausschließlich, der Dunkelstrom des verwendeten Detektors.

### Stand der Technik

Bei bekannten Verfahren zur Untergrundkorrektur wird der Untergrund ermittelt und anschließend vom Signal subtrahiert.

DE 100 55 905 A1 offenbart ein Verfahren zur Untergrundkorrektur in zweidimensionalen Echellespektren. Dabei wird Streulicht und der Dunkelstrom des Detektors durch Messung der Intensität zwischen den Ordnungen ermittelt. Im übrigen wird der Untergrund ermittelt, indem die Kurve durch mehrfache Anwendung eines gleitenden Mittelwerts, auch als "Moving Average" bezeichnet, geglättet wird. Werte, die oberhalb der Kurve liegen, werden auf den Wert der geglätteten Kurve gesetzt. Die Peaks schrumpfen mit der Anzahl von Operationen, während der Rest der geglätteten Kurve sich an die ursprüngliche Kurve anschmiegt. Der so errechnete Untergrund wird von der ursprünglichen Kurve subtrahiert.

DE 196 17 100 B4 offenbart ein Verfahren zur Untergrundkorrektur bei der eine Funktion durch lokale Minima gelegt wird. Zur Berechnung der Funktion werden nicht alle Punkte hinzugezogen, sondern nur die lokalen Minima.

Der Artikel von Christopher Rowlands und Stephen Elliott im Journal of Raman Spectroscopy 2011, 42, 363-369 diskutiert verschiedene Verfahren zur Untergrundkorrektur von Spektren und offenbart die Berechnung der zweiten Ableitung einer Spektralfunktion (LSD) zur Erfassung des Untergrunds.

US 20060255249 A1 offenbart die Bestimmung der Variation der Intensitätswerte in verschiedenen Bereichen eines Spektrums und definiert diese Variation als Untergrundsignal. Das resultierende Untergrundsignal ist nicht stetig differenzierbar sondern stückweise linear. Das entspricht nicht den zugrundeliegenden physikalischen Prozessen.

**Offenbarung der Erfindung**

Es ist Aufgabe der Erfindung, eine Vorrichtung der eingangs genannten Art zu schaffen, welches eine automatische und reproduzierbare Untergrundkorrektur mit hoher Richtigkeit ermöglicht.

Erfindungsgemäß wird die Aufgabe gelöst durch ein Verfahren mit den Schritten:

(a) Berechnen wenigstens dreier Funktionen aus den Signalwerten des Spektrums, wobei die Funktionen ausgewählt sind aus:

(A) gleitender Mittelwert
(B) Varianz
(C) Schiefe
(D) Exzeß
(E) gleitendes Mittel mit fester Fensterbreite von 3 Punkten
(F) zweite Ableitung
(G) Median
(H) Maximum
(I) Minimum
(J) Differenz zwischen Maximum und Minimum
(K) Quotient des zentralen Signalwertes und dem Mittelwert
(L) Quotient (Maximum-Mittelwert)/(Maximum-Minimum);

(b) Zuordnen von Wahrscheinlichkeiten $P_i$(Bande) für das Vorliegen von Banden zu jedem Punkt in jeder der berechneten Funktionen;
(c) Summieren der Wahrscheinlichkeiten $P_i$(Bande) zu einer Gesamtwahrscheinlichkeit $\sum P_i$(Bande) aus allen berechneten Funktionen für jeden Punkt;
(d) Berechnen einer Wahrscheinlichkeit P(Untergrund) für das Vorliegen von Untergrund für jeden Punkt des Spektrums aus der Gesamtwahrscheinlichkeit $\sum P_i$(Bande) nach

$$P(\text{Untergrund}) = 1 - \sum P_i(\text{Bande})$$

wobei negative Werte auf Null gesetzt werden.
(e) Berechnen eines Fits durch die Signalwerte auf allen Punkten des ursprünglichen Spektrums, wobei das Signal auf jedem Punkt nur mit der zugehörigen Wahrscheinlichkeit für das Vorliegen von Untergrund P(Untergrund) bei dem Fit berücksichtigt wird, und
(f) Subtraktion der so ermittelten Untergrundfunktion von den Signalwerten des ursprünglichen Spektrums zur Erzeugung eines Untergrund-korrigierten Spektrums.

Ein Punkt ist dabei ein Wert auf der Abszisse und kann beispielsweise den Bildpunkten auf dem Detektor (Detektorelement), einem Wellenlängenintervall, Frequenzintervall oder einer Masse entsprechen.
Der Signalwert ist ein Wert auf der Ordinate und kann der Intensität einer Emission oder Absorption oder einer Intensität in einem Massespektrum entsprechen.
Bei dem erfindungsgemäßen Verfahren wird anders als bei bekannten Verfahren eine Wahrscheinlichkeit berechnet, mit der ein Signal Teil des Untergrundes ist. Das Untergrundsignal, das mit einer beliebigen Spektrometeranordnung ermittelt wird, kann automatisch und sicher quantifiziert werden. Dadurch wird die Erkennung von Banden und Peaks verbessert. Da das Untergrundsignal automatisch ermittelt wird, ist es unabhängig von der Einschätzung des tätigen Personals und kann schnell, reproduzierbar und zuverlässig bestimmt werden.
Das Verfahren nutzt die Erkenntnis, dass Untergrundsignale in Spektren stetig und stetig differenzierbar sind und durch eine stetig differenzierbare Funktion beschrieben werden können. Beispiele für eine solche Funktion sind Polynome.
Das Verfahren nutzt eine Auswahl von verschiedenen Funktionen (A) bis (L). Nacheinander wird um jeden Punkt ein Fenster mit immer gleicher Breite gelegt. Beispielsweise ein Fenster mit 9 Punkten. Vier Punkte liegen links des Zentrums. Vier Punkte liegen rechts des Zentrums und der Punkt im Zentrum zählt ebenfalls dazu. Fenster mit ungradzahliger Anzahl an Punkten als Breite werden bevorzugt, da diese einen Punkt im Zentrum haben, was bei einigen Funktionen erforderlich ist. Für jeden Punkt des Spektrums als Zentrum wird dann berechnet:

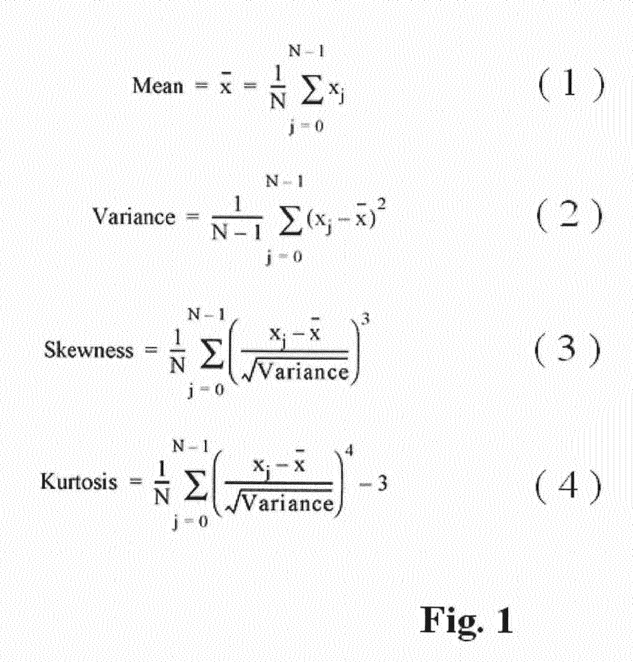

(A) gleitender Mittelwert: Hierbei handelt es sich um das 1 .statistische Moment und wird berechnet nach Formel (1) in Figur 1.
(B) Varianz: Hierbei handelt es sich um das 2. statistische Moment und wird berechnet nach Formel (2).
(C) Schiefe (engl. Skewness): Hierbei handelt es sich um das 3. statistische Moment und wird berechnet nach Formel (3).
(D) Exzeß (engl. Kurtosis): Hierbei handelt es sich um das 4. statistische Moment und wird berechnet nach Formel (4).
(E) gleitendes Mittel mit fester Fensterbreite von 3 Punkten: Hierbei handelt es sich um einen Spezialfall von (A) mit der Fensterbreite 3 Punkte.
(F) zweite Ableitung: Hierbei handelt es sich um eine Funktion aus der Differentialrechnung, welche die Krümmung einer Kurve beschreibt und berechnet wird: $f''=d^2x/dx^2$

(G) Median: Hierbei handelt es sich um den Signalwert, der in einer Auflistung der Signalwerte in der Mitte steht, wenn die Werte der Größe nach sortiert werden.

(H) Maximum: Hierbei handelt es sich um den größten Signalwert in dem jeweiligen Fenster

(I) Minimum: Hierbei handelt es sich um den kleinsten Signalwert in dem jeweiligen Fenster

(J) Differenz zwischen Maximum und Minimum: Hierbei handelt es sich um den Wert, der erhalten wird, wenn der kleinste Signalwert in dem jeweiligen Fenster vom größten Signalwert subtrahiert wird.

(K) Quotient des zentralen Signalwertes und dem Mittelwert: Hierbei handelt es sich um den Wert, der erhalten wird, wenn der Wert im Zentrum des Fensters durch den Mittelwert geteilt wird.

(L) Quotient (Maximum-Mittelwert)/(Maximum-Minimum): Hierbei handelt es sich um den Wert, der erhalten wird, wenn die Differenz zwischen Maximum und Mittelwert durch die Differenz zwischen Maximum und Minimum geteilt wird.

Alle Funktionen beschreiben Eigenschaften des spektralen Verlaufs. Eine Kombination von drei dieser Funktionen, vorzugsweise fünf, ist ausreichend um ausreichende Informationen zur Bestimmung des Untergrundverlaufs zu erhalten. Vorzugsweise werden diese Funktionen für wenigstens zwei verschiedene Fensterbreiten berechnet. Anschließend werden jedem Punkt Wahrscheinlichkeiten $P_i(Bande)$ für das Vorliegen von Banden zugeordnet. Eine hohe Wahrscheinlichkeit liegt beispielsweise im Bereich eines Peaks vor und kann als Zahl nahe 1 = 100% ausgedrückt werden. Bei der Berechnung der Wahrscheinlichkeiten wird jeweils eine der ausgewählten Funktionen (A) bis (L) verwendet. Es ergeben sich also für jede der ausgewählten Funktionen ein zugehöriges Wahrscheinlichkeitsspektrum.

Das erfindungsgemäße Verfahren sieht weiterhin vor, dass die so ermittelten Wahrscheinlichkeiten $P_i(Bande)$ zu einer Gesamtwahrscheinlichkeit $\Sigma P_i(Bande)$ aus allen berechneten Funktionen für jeden Punkt aufsummiert werden. Es wird punktweise eine Summe gebildet. Aus den verschiedenen Wahrscheinlichkeitsspektren ergibt sich ein Gesamtwahrscheinlichkeitsspektrum.

Das Gesamtwahrscheinlichkeitsspektrum kann in ein Spektrum invertiert werden, das die Wahrscheinlichkeit für das Vorliegen von Untergrund wiedergibt. Dies erfolgt nach:

$$P(Untergrund)=1-\Sigma P_i(Bande)$$

Je größer die Wahrscheinlichkeit, dass ein Punkt zu einer Bande gehört, umso kleiner ist die Wahrscheinlichkeit, dass das Signal auf diesem Punkt zum Untergrund gehört. Da die Summe der Wahrscheinlichkeiten zu einem Wert größer 1 addieren können, besteht die Möglichkeit, dass sich negative Werte P(Untergrund) ergeben. Diese werden auf Null gesetzt. Mit anderen Worten: an diesem Punkt ist in jedem Fall eine Bande.

Eine Untergrundfunktion wird ermittelt indem ein Fit durch die Signalwerte auf allen Punkten des ursprünglichen Spektrums berechnet wird. Dabei wird das Signal auf jedem Punkt nur mit der zugehörigen Wahrscheinlichkeit für das Vorliegen von Untergrund P(Untergrund) bei dem Fit berücksichtigt. Ein Punkt, auf dem mit Sicherheit eine Bande vorliegt, bleibt also vollständig unberücksichtigt. Ein Punkt, auf dem mit Sicherheit keine Bande vorliegt, wird mit vollem Wert berücksichtigt. Anders als bei bekannten Verfahren werden aber Werte, bei denen eine Wahrscheinlichkeit dazwischen angenommen werden muss, auch nur mit einer solchen verringerten Wahrscheinlichkeit berücksichtigt. Das heißt, daß bei allen Punkten des Spektrums die Wahrscheinlichkeit P(Untergrund) als Wichtungsfaktor (Gewicht) in die mathematische Bestimmung der Untergrundfunktion (Fit) eingeht.

Die einmal gefundene Untergrundfunktion wird anschließend von den Signalwerten subtrahiert und es bleibt das Untergrund-korrigierte Spektrum mit den analytisch interessierenden Banden.

Bei einer besonders bevorzugten Ausgestaltung der Erfindung werden die Werte der berechneten Funktionen durch Division durch den Mittelwert der zugehörigen Funktionswerte über alle Punkte normiert. Dieser Schritt erfolgt vorzugsweise unmittelbar nachdem die Funktionen (A) bis (L) oder die ausgewählten Funktionen berechnet wurden. Es ergeben sich normierte Spektren.

Bei einer bevorzugten Ausgestaltung der Erfindung werden die Wahrscheinlichkeiten $P_i(Bande)$ für das Vorliegen von Banden berechnet, indem jedem Punkt, dessen normierter Parameter ober- oder unterhalb eines Schwellwertes S liegt eine Wahrscheinlichkeit zugewiesen wird, die proportional zum Abstand des normierten Parameters vom Schwellwert S ist. Der Schwellwert S liegt im Allgemeinen im Bereich von 1, es sind natürlich auch andere Schwellwerte denkbar. Alternative Ausführungsbeispiele verwenden andere Berechnungsverfahren zur Berechnung der Wahrscheinlichkeit.

Vorzugsweise werden die Wahrscheinlichkeiten $P_i(Bande)$ vor der Berechnung der Gesamtwahrscheinlichkeit mit einem Faktor $\alpha_i$ multipliziert, so dass gilt:

$$P(Untergrund)=1-\Sigma\,\alpha_i P_i(Bande)$$

Die Verwendung eines Gewichtungsfaktors ermöglicht es, dass Funktionen, die eine höhere Relevanz bei der Bestimmung von Banden haben als andere, mit einem höheren Gewicht in die Rechnung eingehen als Funktionen, die von eher geringer Bedeutung sind.

Bei einer Ausgestaltung der Erfindung erfolgt der Fit durch Signalwerte auf allen Punkten des ursprünglichen Spektrums mittels einer Fitfunktion und der Methode der kleinsten Fehlerquadrate. Bei diesem Verfahren wird für jeden Punkt das Abstandsquadrat zur Fitfunktion ermittelt. Die Summe der Abstandsquadrate ist ein Maß für die Qualität der Fitfunktion. Entsprechend kann die Fitfunktion solange optimiert werden, bis sie die Untergrundfunktion adäquat widerspiegelt.

Bei einer weiteren Ausgestaltung der Erfindung werden mehrere Fit-Funktionen unterschiedlichen Typs verwendet und es wird diejenige mit der kleinsten Abweichung der Fehlerquadrate ausgewählt. Beispielsweise können die Logarithmen der Werte auf einer oder beiden Achsen zur Optimierung der Fitfunktion verwendet werden. In jedem Fall geht jeder Punkt immer nur mit seiner eigenen Wahrscheinlichkeit in die Rechnung ein.

Beispielsweise kann ein Polynom als Fitfunktion für den Fit durch alle Punkte des ursprünglichen Spektrums verwendet werden. Eine lineare Funktion der Form y=a+bx kann dabei bereits ausreichend sein, wobei jeder Punkt mit seiner Wahrscheinlichkeit berücksichtigt wird. Es kann weiterhin geprüft werden, ob eine vorausgehende Koordinatentransformation der Gestalt x → log x und/oder y → log y zu einer höheren Qualität der Fitfunktion führt.

Bei einer besonders bevorzugten Ausgestaltung der Erfindung wird das Verfahren mehrfach für wenigstens zwei verschiedene Fensterbreiten, vorzugsweise für die Fensterbreiten 5, 9, 13 und 17 Punkte durchgeführt und diejenige mit der kleinsten Abweichung der Fehlerquadrate für die Auswahl der Fitfunktion ausgewählt. Je nach Breite der Banden und dem spektralen Verlauf liefern unterschiedliche Fensterbreiten unterschiedliche Ergebnisse. Die Funktionen (A) bis (L) werden für jede Fensterbreite gesondert berechnet.

Bei einer besonders bevorzugten Ausgestaltung der Erfindungen werden nur die folgenden als Funktionen ausgewählt:

(A) gleitender Mittelwert
(B) Varianz
(E) gleitendes Mittel mit fester Fensterbreite von 3 Punkten
(F) zweite Ableitung
(G) Median
(H) Maximum
(J) Differenz zwischen Maximum und Minimum
(K) Quotient des zentralen Signalwertes und dem Mittelwert,

und bevorzugt nur die Funktionen

(A) gleitender Mittelwert
(B) Varianz
(E) gleitendes Mittel mit fester Fensterbreite von 3 Punkten
(F) zweite Ableitung
(G) Median
(H) Maximum.

Bereits diese Funktionen liefern sehr gute Ergebnisse.

Ausgestaltungen der Erfindung sind Gegenstand der Unteransprüche. Ein Ausführungsbeispiel ist nachstehend unter Bezugnahme auf die beigefügten Zeichnungen näher erläutert.

**Kurze Beschreibung der Zeichnungen**

Fig.1    ist eine Auflistung der ersten vier statistischen Momente und der Formel zu ihrer Berechnung.

Fig.2    zeigt ein unbearbeitetes Spektrum aus aufgenommenen Signalwerten.

Fig.3    zeigt ein Spektrum, das durch Bearbeitung des Spektrums aus Figur 2 mit Funktion (A) gleitender Mittelwert erhalten wird.

Fig.4    zeigt ein Spektrum, das durch Bearbeitung des Spektrums aus Figur 2 mit Funktion (B) Varianz erhalten wird.

Fig.5    zeigt ein Spektrum, das durch Bearbeitung des Spektrums aus Figur 2 mit Funktion (C) Schiefe erhalten wird.

Fig.6    zeigt ein Spektrum, das durch Bearbeitung des Spektrums aus Figur 2 mit Funktion (D) Exzeß erhalten wird.

Fig.7    zeigt ein Spektrum, das durch Bearbeitung des Spektrums aus Figur 2 mit Funktion (E) gleitendes Mittel mit fester Fensterbreite von 3 Punkten erhalten wird.

Fig.8    zeigt ein Spektrum, das durch Bearbeitung des Spektrums aus Figur 2 mit Funktion (F) zweite Ableitung erhalten wird.

Fig.9    zeigt ein Spektrum, das durch Bearbeitung des Spektrums aus Figur 2 mit Funktion (G) Median erhalten wird.

Fig.10    zeigt ein Spektrum, das durch Bearbeitung des Spektrums aus Figur 2 mit Funktion (H) Maximum erhalten wird.

Fig.11    zeigt ein Spektrum, das durch Bearbeitung des Spektrums aus Figur 2 mit Funktion (I) Minimum erhalten wird.

Fig.12    zeigt ein Spektrum, das durch Bearbeitung des Spektrums aus Figur 2 mit Funktion (J) Differenz zwischen Maximum und Minimum erhalten wird.

Fig.13    zeigt ein Spektrum, das durch Bearbeitung des Spektrums aus Figur 2 mit Funktion (K) Quotient des zentralen Signalwertes und dem Mittelwert erhalten wird.

Fig.14    zeigt ein Spektrum, das durch Bearbeitung des Spektrums aus Figur 2 mit Funktion (L) Quotient (Maximum-Mittelwert)/(Maximum-Minimum) erhalten wird.

Fig.15    zeigt ein Spektrum, das durch Bearbeitung des Spektrums aus Figur 2 mit Funktion (A) gleitender Mittelwert nach Normalisierung erhalten wird.

Fig.16    zeigt ein Spektrum, das durch Bearbeitung des Spektrums aus Figur 2 mit Funktion (B) Varianz nach Normalisierung erhalten wird.

Fig.17    zeigt ein Spektrum, das durch Bearbeitung des Spektrums aus Figur 2 mit Funktion (C) Schiefe nach Normalisierung erhalten wird.

Fig.18    zeigt ein Spektrum, das durch Bearbeitung des Spektrums aus Figur 2 mit Funktion (D) Exzeß nach Normalisierung erhalten wird.

Fig.19    zeigt ein Spektrum, das durch Bearbeitung des Spektrums aus Figur 2 mit Funktion (E) gleitendes Mittel mit fester Fensterbreite von 3 Punkten nach Normalisierung erhalten wird.

Fig.20    zeigt ein Spektrum, das durch Bearbeitung des Spektrums aus Figur 2 mit Funktion (F) zweite Ableitung nach Normalisierung erhalten wird.

Fig.21    zeigt ein Spektrum, das durch Bearbeitung des Spektrums aus Figur 2 mit Funktion (G) Median nach Normalisierung erhalten wird.

Fig.22    zeigt ein Spektrum, das durch Bearbeitung des Spektrums aus Figur 2 mit Funktion (H) Maximum nach Normalisierung erhalten wird.

Fig.23    zeigt ein Spektrum, das durch Bearbeitung des Spektrums aus Figur 2 mit Funktion (I) Minimum nach Normalisierung erhalten wird.

Fig.24    zeigt ein Spektrum, das durch Bearbeitung des Spektrums aus Figur 2 mit Funktion (J) Differenz zwischen Maximum und Minimum nach Normalisierung erhalten wird.

Fig.25    zeigt ein Spektrum, das durch Bearbeitung des Spektrums aus Figur 2 mit Funktion (K) Quotient des zentralen Signalwertes und dem Mittelwert nach Normalisierung erhalten wird.

Fig.26    zeigt ein Spektrum, das durch Bearbeitung des Spektrums aus Figur 2 mit Funktion (L) Quotient (Maximum-Mittelwert)/(Maximum-Minimum) nach Normalisierung erhalten wird.

Fig.27    zeigt ein Wahrscheinlichkeitsspektrum, das durch Bearbeitung des Spektrums aus Figur 15 erhalten wird.

Fig.28    zeigt ein Wahrscheinlichkeitsspektrum, das durch Bearbeitung des Spektrums aus Figur 16 erhalten wird.

Fig.29    zeigt ein Wahrscheinlichkeitsspektrum, das durch Bearbeitung des Spektrums aus Figur 19 erhalten wird.

Fig.30    zeigt ein Wahrscheinlichkeitsspektrum, das durch Bearbeitung des Spektrums aus Figur 20 erhalten wird.

Fig.31    zeigt ein Wahrscheinlichkeitsspektrum, das durch Bearbeitung des Spektrums aus Figur 21 erhalten wird.

Fig.32    zeigt ein Wahrscheinlichkeitsspektrum, das durch Bearbeitung des Spektrums aus Figur 22 erhalten wird.

Fig.33    zeigt ein Wahrscheinlichkeitsspektrum, das durch Bearbeitung des Spektrums aus Figur 25 erhalten wird.

Fig.34    zeigt ein Wahrscheinlichkeitsspektrum für die Gesamtwahrscheinlichkeit für das Vorliegen von Banden, das durch Aufsummieren der Wahrscheinlichkeiten aus den Spektren in Figuren 27 bis 33 erhalten wird.

Fig.35    zeigt ein Wahrscheinlichkeitsspektrum für die Wahrscheinlichkeit für das Vorliegen von Untergrund, das aus dem Spektrum in Figur 34 erhalten wird.

Fig. 36    zeigt ein Emissionsspektrum mit einem Peak und Untergrund einer realen Probe und einer Illustration der Wahrscheinlichkeiten, mit denen ein Detektorelement zu einer Bande gehört bzw. ausschließlich ein Untergrundsignal erfasst.

Fig. 37    zeigt das Emissionsspektrum aus Figur 36 mit einem Untergrundfit.

**Beschreibung des Ausführungsbeispiels**

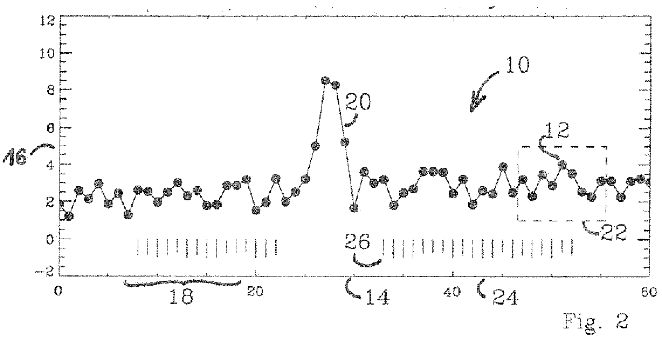

Figur 2 zeigt ein allgemein mit 10 bezeichnetes Spektrum. Das Spektrum 10 zeigt Signalwerte 12, die beispielsweise mit einem Zeilendetektor mit einer Vielzahl von linear angeordneten Detektorelementen aufgenommen werden. Entsprechend ist die Abszisse 14 mit Zahlen versehen, die die Lage der Detektorelemente in der Zeile repräsentieren. Auf der Ordinate 16 werden Werte angegeben, die den Signalwert repräsentieren. Signalwerte können beispielsweise Intensitäten sein, die auf einem Detektorelement gemessen werden.

Das Spektrum 10 weist Bereiche 18 auf, in denen die Signale bis auf Rauschen flach verlaufen und vermutlich durch Untergrund verursacht werden. Im mittleren Bereich ist ein Peak 20 zu erkennen.

Ziel bei der automatisierten Auswertung dieses und jeden anderen Spektrums ist es, den Untergrund quantitativ zu erfassen und so die Trennung von Banden (Peaks) zu ermöglichen.

In einem ersten Schritt werden die Signalwerte statistisch analysiert. Hierzu wird eine Fensterbreite ausgewählt. Das vorliegende Ausführungsbeispiel wird mit einer Fensterbreite 9 ausgeführt. Ein Beispiel für eine solche Fensterbreite ist in Figur 2 illustriert. Das mit 22 bezeichnete Fenster umfasst einen zentralen Punkt 12 und jeweils vier Punkte auf jeder Seite, d.h. insgesamt 9 Punkte.

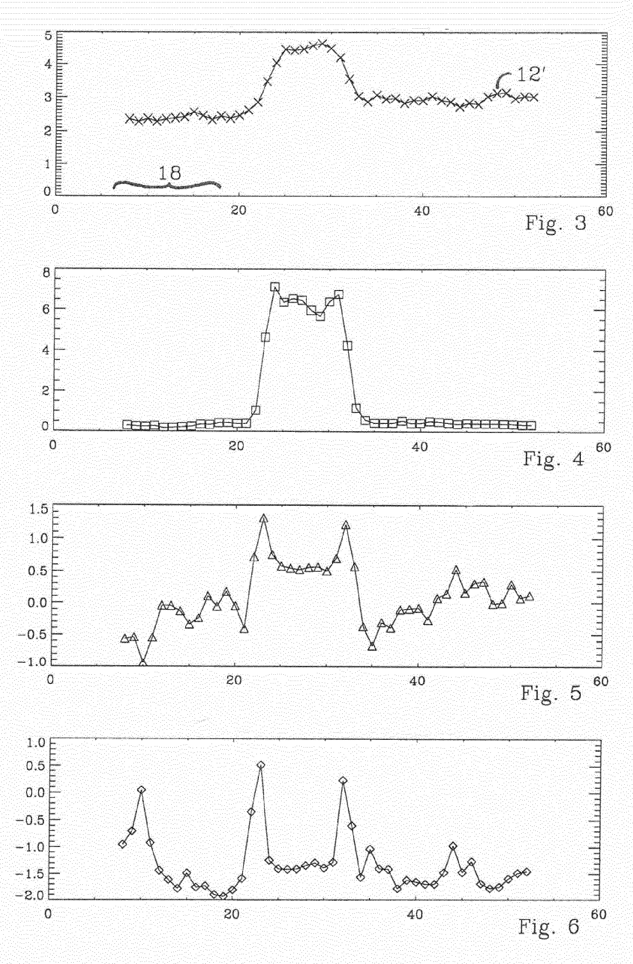

Bei der Berechnung des ersten statistischen Moments wird der Mittelwert - im folgenden als Funktion (A) bezeichnet - berechnet. Die zugehörige Formel ist in Figur 1 mit (1) bezeichnet. Der am Punkt 24 liegende Signalwert 12 wird dabei durch den Mittelwert über alle im Fenster 22 um diesen Punkt 12 herum liegende Punkte ersetzt. Dieser Vorgang wird für alle Punkte wiederholt. Das Ergebnis der Berechnung dieser Funktion (A) ist in Figur 3 dargestellt. Man erkennt, dass flache Bereiche 18 weiterhin flach bleiben. Der Peak 20 wird jedoch flacher und breiter. Einzelne Ausreißer verschwinden.

Neben dem gleitenden Mittelwert der Funktion A werden weitere Funktionen berechnet, deren Ergebnisse in den Figuren 4 bis 14 dargestellt sind. Die Berechnung der als Funktion (B) bezeichnete Varianz wird nach der in Figur 1 (2) dargestellten Formel berechnet. Das Ergebnis ist in Figur 4 dargestellt. Die Berechnung der als Funktion (C) bezeichnete Schiefe (engl. Skewness) wird nach der in Figur 1 (3) dargestellten Formel berechnet. Das Ergebnis ist in Figur 5 dargestellt. Die Berechnung der als Funktion (D) bezeichnete Exzess (engl. Kurtosis) wird nach der in Figur 1 (4) dargestellten Formel berechnet. Das Ergebnis ist in Figur 6 dargestellt. In den Formeln bezeichnet x die Lage des Punktes und N die Fensterbreite - im vorliegenden Fall ist N=9.

Neben den ersten vier statistischen Momenten werden weitere Funktionen berechnet:

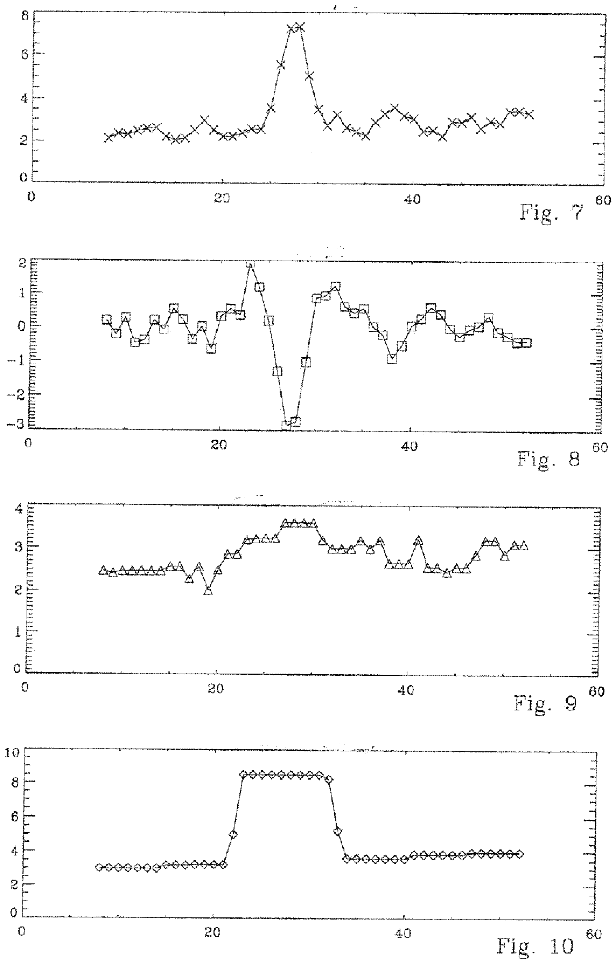

Funktion (E) ist das gleitende Mittel mit fester Fensterbreite von 3 Punkten und entspricht bis auf die Fensterbreite der Funktion (A). Das Ergebnis der Berechnung von Funktion (E) ist in Figur 7 dargestellt. Man erkennt, dass eine geringere Fensterbreite den Peak weniger verbreitert als eine größere Fensterbreite.

Funktion (F) ist die zweite Ableitung und beschreibt den Verlauf der Krümmung. Das Ergebnis der Berechnung von Funktion (F) ist in Figur 8 dargestellt.

Funktion (G) ist der Median. Dieser wird folgendermaßen ermittelt: die Signalwerte in einem Fenster werden der Größe nach sortiert. Der 5.-größte Wert, d.h. derjenige in der Mitte der Sortierung, ist der Median bei einer Fensterbreite von 9. Das Ergebnis der Berechnung von Funktion (G) ist in Figur 9 dargestellt.

Die Funktion (H) ist das Maximum aller Werte in einem Fenster. Der zentrale Wert des Fensters wird also durch den Maximalwert ersetzt, auch wenn dieser am Rand des Fensters liegt. Entsprechend wird eine sehr glatte Kurve praktisch ohne Ausreißer erhalten. Peaks sind stark verbreitert. Das Ergebnis der Berechnung von Funktion (H) ist in Figur 10 dargestellt.

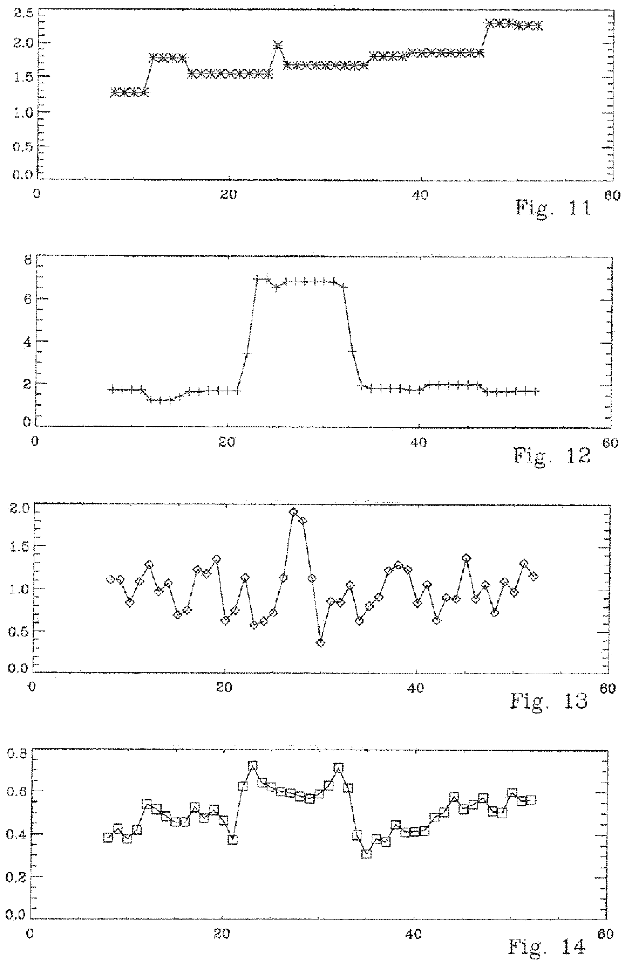

Die Funktion (I) ist das Minimum aller Werte in einem Fenster. Die Berechnung erfolgt analog zur Berechnung des Maximalwerts. Das Ergebnis der Berechnung von Funktion (I) ist in Figur 11 dargestellt.

Die Funktion (J) ist die Differenz zwischen Maximum und Minimum aller Werte in einem Fenster. Das Ergebnis der Berechnung von Funktion (J) ist in Figur 12 dargestellt.

Die Funktion (K) ist der Quotient des zentralen Signalwertes und dem Mittelwert. Das Ergebnis der Berechnung von Funktion (K) ist in Figur 13 dargestellt.

Die Funktion (L) ist der Quotient (Maximum-Mittelwert)/(Maximum-Minimum) der Werte in einem Fenster. Das Ergebnis der Berechnung von Funktion (L) ist in Figur 14 dargestellt.

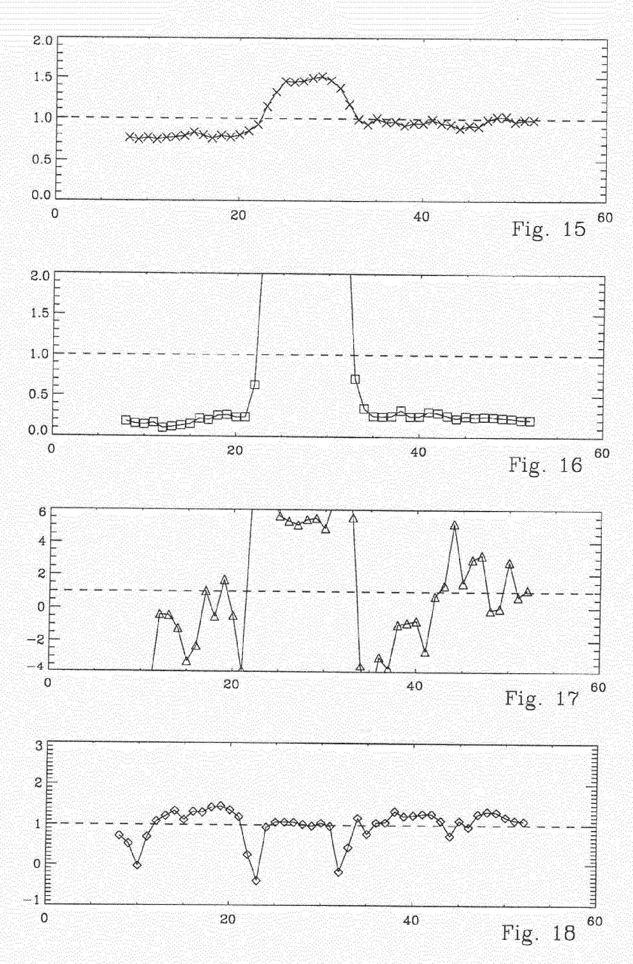

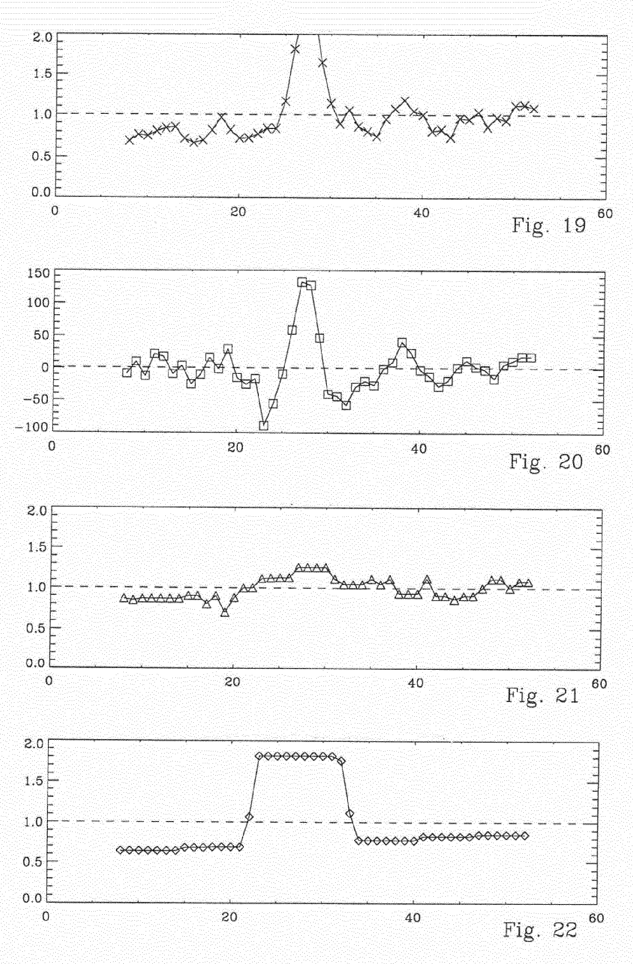

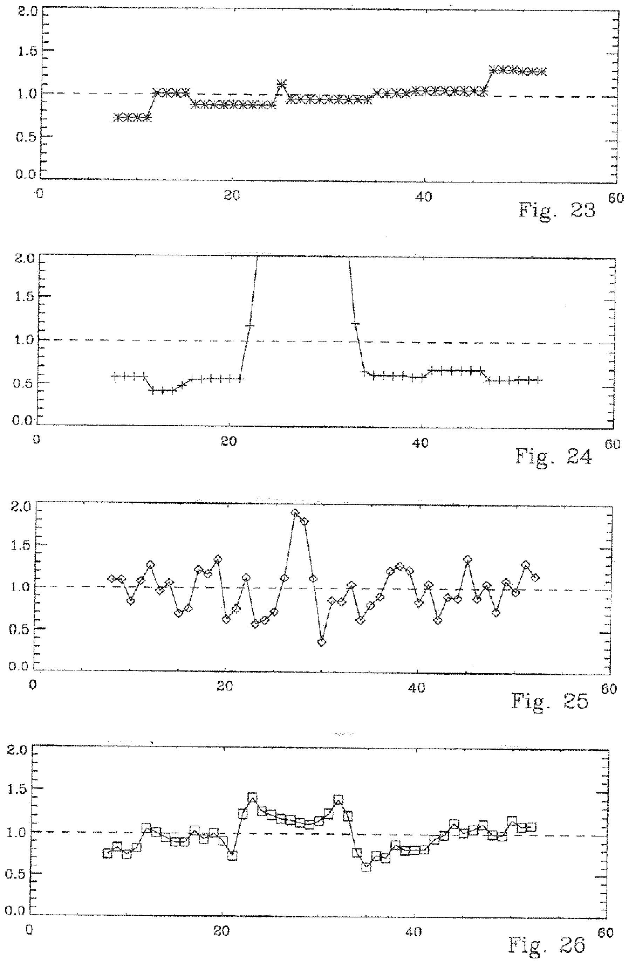

Es ist leicht erkennbar, dass die Funktionen (A) bis (L) unterschiedliche Offsets haben. Die Werte werden daher normiert, indem sie durch den Mittelwert aller Punkte der Funktionen dividiert werden. Dadurch wird erreicht, dass die Werte um den Wert 1 schwanken. Das Ergebnis ist in den Figuren 15 bis 26 für alle Funktionen (A) bis (L) dargestellt.

Aus den normierten Werten der Funktionen (A) bis (L) werden anschließend Wahrscheinlichkeiten $P_i$(Bande) dafür errechnet, daß der Signalwert an dem betreffenden Punkt zu einer Bande oder einem Peak gehört. Dabei bekommt jeder Punkt, dessen normierter Parameter ober- oder unterhalb des Schwellwertes S liegt, eine Wahrscheinlichkeit zugewiesen, die proportional zum Abstand des Parameters vom genannten Schwellwert ist. Der Schwellwert S liegt bis auf eine Ausnahme immer im Bereich von 1. Die Ausnahme betrifft die Funktion (F) = y″, also die zweite Ableitung. Hier muß S entsprechend der Struktur der Banden im Spektrum gewählt werden: Feine und schmale Banden → S groß wählen, breite oder schlecht aufgelöste Banden → S klein wählen. Prinzipiell gilt

$$P_i(Bande) = r_i * ( Funktion_{normiert} - S_i )^t \, ,$$

wobei die Proportionalitätsfaktoren $r_i$ geeignet gewählt werden müssen. In einer bevorzugten Ausgestaltung des Verfahrens haben die $r_i$ und $S_i$ folgende Werte:

| Funktion | r | S | t |
|---|---|---|---|
| A | 1.0 | 1.2 | 1 |
| B | 0.2 | 1.0 | ½ |
| C | 0.0 | 1.0 | 1 |
| D | 0.0 | 1.0 | 1 |
| E | 0.5 | 1.0 | ½ |
| F | 0.1 | 50 | ½ |
| G | 1.0 | 1.1 | 1 |
| H | 1.0 | 1.1 | ½ |
| I | 0.0 | 1.0 | 1 |
| J | 0.0 | 1.2 | ½ |
| K | 0.5 | 1.2 | ½ |
| L | 0.0 | 1.0 | 1 |

Ein Wert von r = 0 besagt, daß die entsprechende Funktion nicht in die Berechnung einer Wahrscheinlichkeit und damit in die Bestimmung der Untergrundfunktion eingeht. Ein Wert von t = ½ besagt, daß aus dem Abstand (Funktion-S) die Wurzel gezogen wird.

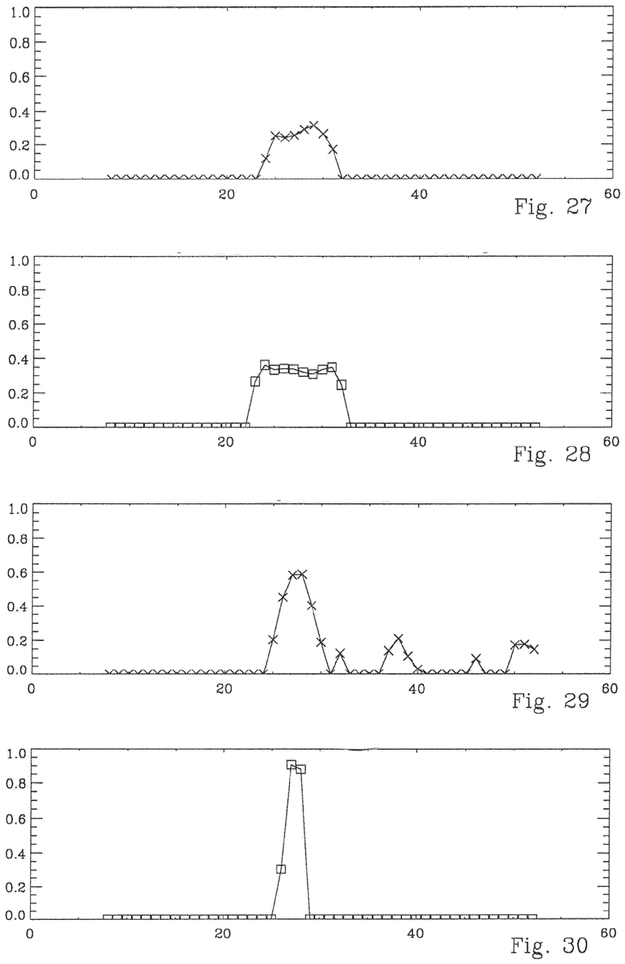

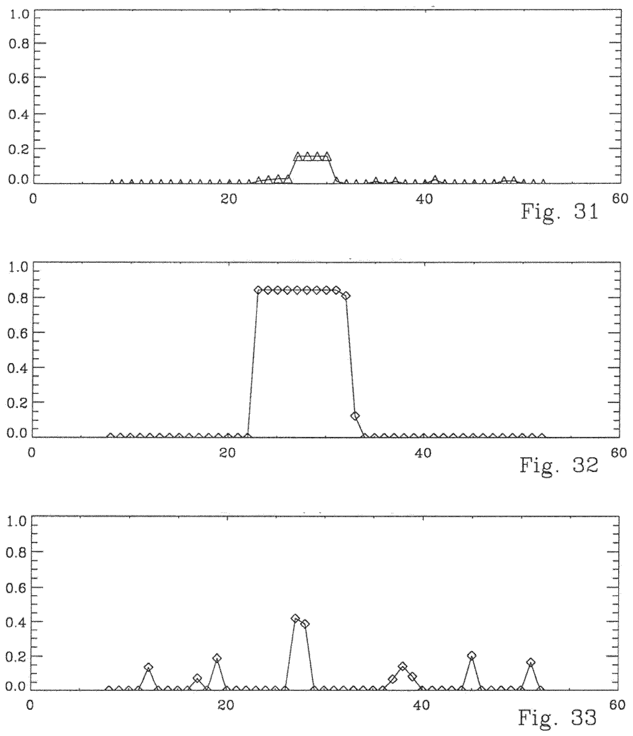

Nicht bei allen Spektren ergibt es Sinn, alle Funktionen zu verwenden. Im vorliegenden Ausführungsbeispielen wurden daher die Funktionen (C), (D), (I), (J) und (L) nicht weiter ausgewertet. Die aus den übrigen normierten Funktionen errechneten Wahrscheinlichkeiten $P_i(Bande)$ für das Vorliegen einer Bande sind in den Figuren 27 bis 33 dargestellt. Der Peak 20 ist in allen diesen Figuren gut zu erkennen.

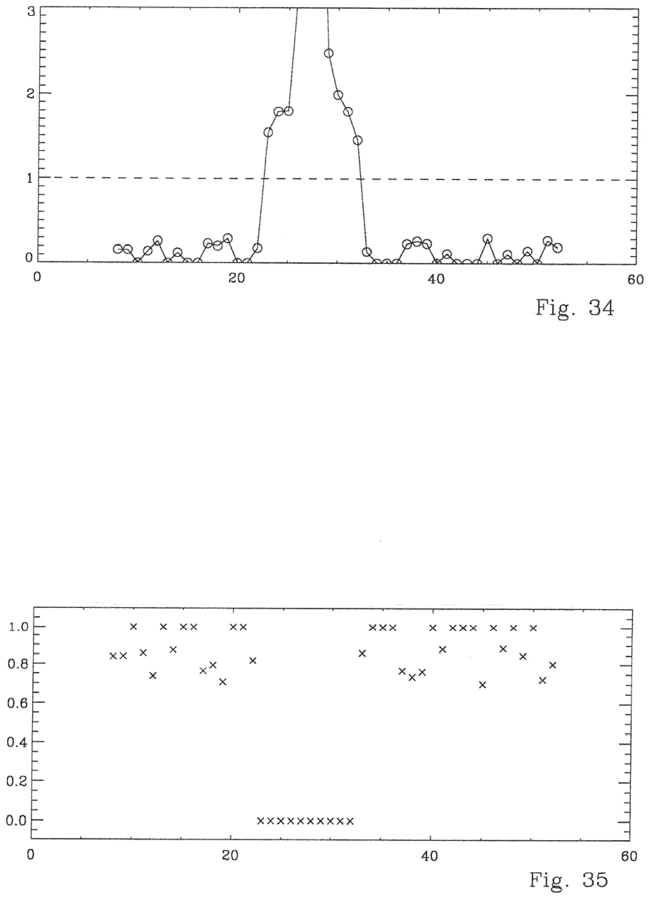

In einem nächsten Schritt werden die Wahrscheinlichkeitswerte $P_i(Bande)$, die zwischen 0 und 1 liegen, punktweise zu einer Gesamtwahrscheinlichkeit für jeden Punkt aufaddiert. Es hat sich herausgestellt, dass einige Funktionen in der Regel relevantere Informationen liefern als andere. Die Wahrscheinlichkeiten werden daher vor der Bildung der Summe mit einem Faktor $\alpha_i$ multipliziert nach $\Sigma\,\alpha_i P_i(Bande)$. Das Ergebnis ist in Figur 34 gut zu erkennen.

Je größer die Wahrscheinlichkeit $P_i(Bande)$, dass ein Punkt zu einer Bande gehört, desto kleiner die Wahrscheinlichkeit $P_i(Untergrund)$, daß er Untergrund zeigt. Figur 35 zeigt die Wahrscheinlichkeit dafür, dass Untergrund vorliegt, die berechnet wird nach:

$$P(Untergrund) = 1 - \Sigma P_i(Bande)$$

Da Wahrscheinlichkeiten zwischen 0 und 1 liegen, werden alle negativen Werte auf Null gesetzt. Hohe Werte in Figur 35 sind ein Indiz dafür, dass mit hoher Wahrscheinlichkeit nur Untergrund vorliegt. Die Nullwerte im mittleren Bereich in Figur 35 zeigen, dass dort mit hoher Wahrscheinlichkeit ein Peak vorhanden ist. Anders ausgedrückt: jeder Punkt im Spektrum hat seine eigene Wahrscheinlichkeit dafür, dass dort nur Untergrund vorliegt. Diese Werte sind in Figur 2 als vertikale Striche 26 illustriert. Man erkennt, dass im Bereich des Peaks 20 keine Wahrscheinlichkeiten vorliegen und im flachen Bereich 18 tatsächlich hohe Wahrscheinlichkeiten für das Vorliegen von Untergrund errechnet wurden. Das automatisch errechnete Ergebnis entspricht also der visuellen Wahrnehmung.

Das beschriebene Verfahren wird im vorliegenden Ausführungsbeispiel für mehrere Fensterbreiten wiederholt, beispielsweise für die Fensterbreiten 11, 13, 15, und 17 Punkte. Es versteht sich, dass dies nur beispielhafte Werte sind und je nach spektraler Auflösung, Rechenkapazität und Peakbreiten völlig andere Werte sinnvoll sein können.

Im Ergebnis liegen für jeden Punkt des Spektrums mehrere Wahrscheinlichkeitswerte vor, die mit unterschiedlichen Fensterbreiten ermittelt wurden. Die N Wahrscheinlichkeiten werden nach ihrer Größe sortiert. Am Ende wird der Wert in der Mitte ausgewählt, was dem Median entspricht. Damit wird eine sehr hohe Stabilität gegenüber Ausreißern unter den jeweils N Wahrscheinlichkeiten erreicht. Solche Ausreißer würden andernfalls (Mittelwert-Bildung, Addition der Werte, usw.) starke Auswirkungen auf das Endergebnis haben.

Im folgenden Schritt wird eine Fitfunktion für den Untergrund ermittelt. Eine solche Fitfunktion kann für das originale Spektrum ermittelt werden. Es ist aber auch möglich, die Fitfunktion für ein Spektrum zu berechnen, das auf einer oder beiden Achsen logarithmisch dargestellt ist. Daraus ergeben sich für jede gewählte Fensterbreite von z.B. 9, 13, 17 usw. Punkten vier verschiedene Funktionen. Die Fitfunktionen werden nach der Methode der kleinsten Fehlerquadrate angepasst. Dabei wird jeder Punkt nur mit der zugehörigen Wahrscheinlichkeit berücksichtigt. Bereiche, in denen ein Peak liegt, werden folglich überhaupt nicht berücksichtigt. Diejenige Fitfunktion, die schließlich den kleinsten Fehler aufweist, wird für die Untergrund-Korrektur verwendet.

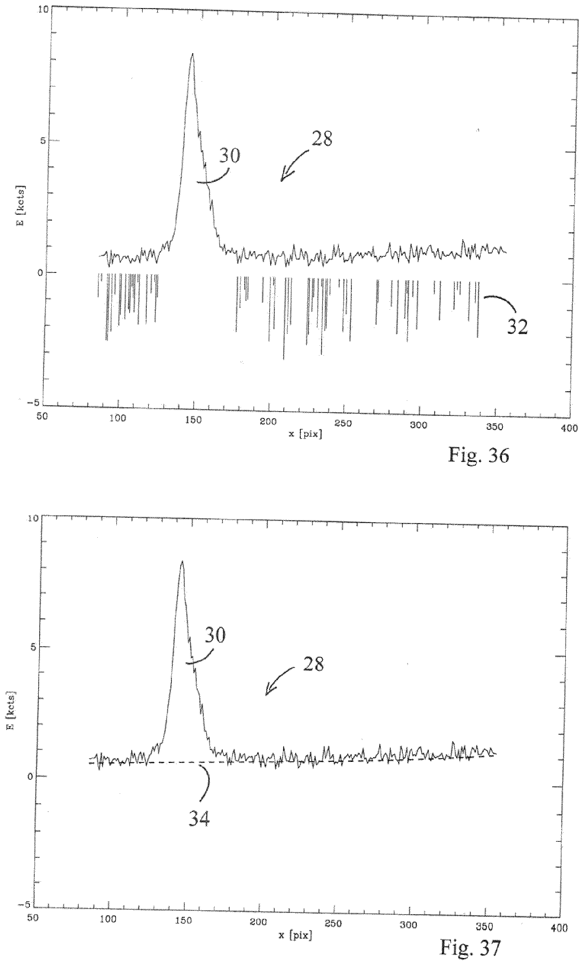

Im vorliegenden Ausführungsbeispiel wurde eine lineare Fitfunktion verwendet. Es ist aber auch möglich Polynome höherer Ordnung zu verwenden oder andere funktionale Zusammenhänge. Figur 36 zeigt ein reales Spektrum 28 mit einem Peak 30. Jedem Punkt des Spektrums wird nach obigen Verfahren eine Wahrscheinlichkeit zugeordnet, die durch einen Strich 32 repräsentiert ist, sofern eine Wahrscheinlichkeit vorliegt. Figur 37 zeigt die nach obigem Verfahren ermittelte, lineare Fitfunktion 34. Wird diese Funktion 34 von den Signalwerten des Spektrums 28 subtrahiert ist leicht erkennbar, dass bis auf ein geringes Rauschen nur der interessierende Peak übrig bleibt. Dieser kann dann quantitativ ausgewertet werden.

Das beschriebene Verfahren hat den Vorteil, dass der Untergrund über den gesamten Spektralverlauf und nicht nur lokal automatisch ermittelt wird. Dadurch wird eine hohe Reproduzierbarkeit und Richtigkeit erreicht.

**Patentansprüche**

1. Verfahren zur Ermittlung und Korrektur von Untergrundsignalen in einem Spektrum (10), welches aus Signalen auf einer Vielzahl von spektralen Punkten (12) besteht, **gekennzeichnet durch** die Schritte:

    (a) Berechnen wenigstens dreier Funktionen aus den Signalwerten des Spektrums, wobei die Funktionen ausgewählt sind aus:

        (A) gleitender Mittelwert
        (B) Varianz
        (C) Schiefe
        (D) Exzeß
        (E) gleitendes Mittel mit fester Fensterbreite von 3 Punkten
        (F) zweite Ableitung
        (G) Median
        (H) Maximum
        (I) Minimum
        (J) Differenz zwischen Maximum und Minimum
        (K) Quotient des zentralen Signalwertes und dem Mittelwert
        (L) Quotient (Maximum-Mittelwert)/(Maximum-Minimum);

    (b) Zuordnen von Wahrscheinlichkeiten $P_i$(Bande) für das Vorliegen von Banden (20) zu jedem Punkt in jeder der berechneten Funktionen;
    (c) Summieren der Wahrscheinlichkeiten $P_i$(Bande) zu einer Gesamtwahrscheinlichkeit $\Sigma P_i$(Bande) aus allen berechneten Funktionen für jeden Punkt;
    (d) Berechnen einer Wahrscheinlichkeit P(Untergrund) für das Vorliegen von Untergrund für jeden Punkt des Spektrums aus der Gesamt-

wahrscheinlichkeit $\Sigma P_i$(Bande) nach

$$P(\text{Untergrund}) = 1 - \Sigma P_i(\text{Bande})$$

wobei negative Werte auf Null gesetzt werden.
    (e) Berechnen eines Fits (34) durch die Signalwerte auf allen Punkten des ursprünglichen Spektrums, wobei das Signal auf jedem Punkt nur mit der zugehörigen Wahrscheinlichkeit (32) für das Vorliegen von Untergrund P(Untergrund) bei dem Fit berücksichtigt wird, und
    (f) Subtraktion der so ermittelten Untergrundfunktion von den Signalwerten des ursprünglichen Spektrums zur Erzeugung eines Untergrund-korrigierten Spektrums.

2. Verfahren nach Anspruch 1, **dadurch gekennzeichnet, dass** die Werte der berechneten Funktionen durch Division durch den Mittelwert der zugehörigen Funktionswerte über alle Punkte normiert werden.

3. Verfahren nach Anspruch 2, **dadurch gekennzeichnet, dass** die Wahrscheinlichkeiten $P_i$(Bande) für das Vorliegen von Banden berechnet werden, indem jedem Punkt, dessen durch Normierung erhaltene Werte ober- oder unterhalb eines Schwellwertes liegt, insbesondere größer als 1,3 und kleiner als 0,7, eine Wahrscheinlichkeit zugewiesen wird, die proportional zum Abstand des Parameters vom genannten Schwellwert ist.

4. Verfahren nach Anspruch 3, **dadurch gekennzeichnet, dass** die Wahrscheinlichkeiten $P_i$(Bande) vor der Berechnung der Gesamtwahrscheinlichkeit mit einem Faktor $\alpha_i$ multipliziert werden, so dass gilt:

$$P(\text{Untergrund}) = 1 - \Sigma \, \alpha_i P(\text{Bande})$$

5. Verfahren nach einem der vorgehenden Ansprüche, **dadurch gekennzeichnet, dass** der Fit durch Signalwerte auf allen Punkten des ursprünglichen Spektrums mittels einer Fitfunktion und der Methode der kleinsten Fehlerquadrate erfolgt.

6. Verfahren nach Anspruch 5, **dadurch gekennzeichnet, dass** mehrere Fit-Funktionen unterschiedlichen Typs verwendet werden und diejenige mit der kleinsten Abweichung der Fehlerquadrate ausgewählt wird.

7. Verfahren nach einem der vorgehenden Ansprüche, **dadurch gekennzeichnet, dass** ein Polynom als Fitfunktion für den Fit durch alle Punkte des ursprünglichen Spektrums verwendet wird.

8. Verfahren nach einem der vorgehenden Ansprüche, **dadurch gekennzeichnet, dass** das Verfahren mehrfach für wenigstens zwei verschiedene Fensterbreiten, vorzugsweise für die Fensterbreiten 5, 9, 13 und 17 Punkte durchgeführt wird und diejenige mit der kleinsten Abweichung der Fehlerquadrate für die Auswahl der Fitfunktion ausgewählt wird.

9. Verfahren nach einem der vorgehenden Ansprüche, **dadurch gekennzeichnet, dass** als Funktionen ausgewählt werden:

> (A) gleitender Mittelwert
> (B) Varianz
> (E) gleitendes Mittel mit fester Fensterbreite von 3 Punkten
> (F) zweite Ableitung
> (G) Median
> (H) Maximum
> (J) Differenz zwischen Maximum und Minimum
> (K) Quotient des zentralen Signalwertes und dem Mittelwert,

> bevorzugt nur die Funktionen

> (A) gleitender Mittelwert
> (B) Varianz
> (E) gleitendes Mittel mit fester Fensterbreite von 3 Punkten
> (F) zweite Ableitung
> (G) Median
> (H) Maximum.

**Claims**

1. Procedure designed to determine and correct background signals in a spectrum (10), said spectrum comprising signals on a multitude of spectral points (12), **characterized by** the following steps:

   (a) Calculation of at least three functions from the signal values of the spectrum, wherein the functions are selected from the following:

   (A) Moving average
   (B) Variance
   (C) Skewness
   (D) Kurtosis
   (E) Moving average with a fixed window width of 3 points
   (F) Second derivative
   (G) Median
   (H) Maximum
   (I) Minimum
   (J) Difference between the maximum and minimum
   (K) Quotient of the central signal value and the average value
   (L) Quotient (maximum average value)/(minimum average value);

   (b) Assignment of probabilities $P_i(band)$ for the presence of bands (20) for each point in each of the calculated functions;
   (c) Totalization of the probabilities $P_i(band)$ to form a total probability $\Sigma P_i(band)$ from all the calculated functions for each point;
   (d) Calculation of a probability P(background) for the presence of a background for each point of the spectrum from the total probability $\Sigma P_i(band)$ according to

$$P(background) = 1 - \Sigma P_i(band)$$

   wherein negative values are set to zero.
   (e) Calculation of a fit (34) across the signal values for all points of the original spectrum, wherein the signal on each point is only considered with the corresponding probability (32) for the presence of background P(background) for the fit, and
   (f) Subtraction of the background function determined in this way from the signal values of the original spectrum to generate a background-corrected spectrum.

2. Procedure as claimed in Claim 1, **characterized in that** the values of the calculated functions are normalized across all points by dividing by the average value of the corresponding function values.

3. Procedure as claimed in Claim 2, **characterized in that** the probabilities Pi(band) for the presence of bands are calculated **in that** each point whose values obtained from normalization are above or below a threshold value, particularly greater than 1.3 and less than 0.7, is assigned a probability that is proportional to the distance of the parameter from the specific threshold value.

4. Procedure as claimed in Claim 3, **characterized in that** the probabilities Pi(band) are multiplied by a factor σ prior to calculating the total probability, such that the following applies:

$$P(background) = 1 - \Sigma \ \sigma_i P_i(band)$$

5. Procedure as claimed in one of the previous claims, **characterized in that** the fit for the signal values on all the points of the original spectrum is performed using a fit function and the least error squares method.

**6.** Procedure as claimed in Claim 5, **characterized in that** several fit functions of different types are used and the function with the smallest deviation of the error squares is selected.

**7.** Procedure as claimed in one of the previous claims, **characterized in that** a polynomial is used as the fit function for the fit across all points of the original spectrum.

**8.** Procedure as claimed in one of the previous claims, **characterized in that** the procedure is performed several times for at least two different window widths, preferably for window widths 5, 9, 13 and 17 points, and the one with the smallest deviation of the error squares is selected for the choice of the fit function.

**9.** Procedure as claimed in one of the previous claims, **characterized in that** the following are selected as the function:

    (A) Moving average
    (B) Variance
    (E) Moving average with fixed window width of 3 points
    (F) Second derivative
    (G) Median
    (H) Maximum
    (J) Difference between maximum and minimum
    (K) Quotient of the central signal value and the average value

preferably only the functions

    (A) Moving average
    (B) Variance
    (E) Moving average with fixed window width of 3 points
    (F) Second derivative
    (G) Median
    (H) Maximum.

## Revendications

**1.** Procédé destiné à la détermination et la correction de signaux de fond dans un spectre (10), lequel se compose d'un grand nombre de points spectraux (12), **caractérisé par** les étapes :

    (a) Calcul d'au moins trois fonctions à partir des valeurs de signal du spectre, les fonctions étant sélectionnées parmi les suivantes :

        (A) Valeur moyenne mobile
        (B) Variance
        (C) Obliquité
        (D) Excès

        (E) Moyenne mobile avec largeur de fenêtre fixe de 3 points
        (F) Dérivée seconde
        (G) Médiane
        (H) Maximum
        (I) Minimum
        J) Différence entre maximum et minimum
        (K) Quotient de la valeur de signal centrale et de la valeur moyenne
        (L) Quotient (valeur moyenne maximum)/(valeur moyenne minimum) ;

    (b) Affectation de probabilités $P_i$(Bande) pour la présence de bandes (20) pour chaque point dans chacune des fonctions calculées ;
    (c) Cumul des probabilités $P_i$(Bande) en une probabilité totale $\Sigma P_i$(Bande) à partir de toutes les fonctions calculées pour chaque point ;
    (d) Calcul d'une probabilité P(fond) pour la présence d'un fond pour chaque point du spectre à partir de la probabilité totale $\Sigma P_i$(Bande) selon

$$P(fond) = 1 - \Sigma P_i(Bande)$$

    les valeurs négatives étant mise à zéro.
    (e) Calcul d'un ajustement à travers les valeurs du signal sur tous les points du spectre d'origine, le signal étant pris en compte, lors de l'ajustement, uniquement avec la probabilité (32) correspondante pour la présence de fond P(fond), et
    (f) Soustraction de la fonction de fond ainsi déterminée des valeurs de signal du spectre d'origine pour la génération d'un spectre à fond corrigé.

**2.** Procédé selon la revendication 1, **caractérisé en ce que** les valeurs des fonctions calculées sont normalisées par division par la valeur moyenne des valeurs de fonction correspondantes sur tous les points.

**3.** Procédé selon la revendication 2, **caractérisé en ce que** les probabilités Pi(bande) pour la présence de bandes sont calculées **en ce qu'**est attribuée, à chaque point dont les valeurs obtenues par normalisation sont supérieures ou inférieures à une valeur seuil, notamment supérieures à 1,3 et inférieures à 0,7, une probabilité proportionnelle à la distance du paramètre par rapport à ladite valeur seuil.

**4.** Procédé selon la revendication 3, **caractérisé en ce que** les probabilités Pi(bande) sont multipliées, avant le calcul de la probabilité totale, avec un facteur σ, selon la formule suivante :

$$P(\text{fond}) = 1 - \Sigma\ \sigma_i P_i(\text{Bande})$$

**5.** Procédé selon l'une des revendications précédentes, **caractérisé en ce que** l'ajustement à travers les valeurs de signal sur tous les points du spectre d'origine est réalisé au moyen d'une fonction d'ajustement et avec la méthode des carrés d'erreur les plus petits.

**6.** Procédé selon la revendication 5, **caractérisé en ce que** plusieurs fonctions d'ajustement de types différents sont utilisées et c'est celle avec le plus petit écart des carrés d'erreur qui est sélectionnée.

**7.** Procédé selon l'une des revendications précédentes, **caractérisé en ce qu'**est utilisé un polynôme en tant que fonction d'ajustement, pour l'ajustement à travers tous les points du spectre d'origine.

**8.** Procédé selon l'une des revendications précédentes, **caractérisé en ce que** le procédé est exécuté plusieurs fois pour au moins deux largeurs de fenêtre différentes, de préférence pour les largeurs de fenêtre 5, 9, 13 et 17 points, et ce sont celles avec le plus petit écart des carrés d'erreur qui sont utilisées pour la sélection de la fonction d'ajustement.

**9.** Procédé selon l'une des revendications précédentes, **caractérisé en ce que** les éléments suivants sont sélectionnés comme fonction :

    (A) Valeur moyenne mobile
    (B) Variance
    (C) Moyenne mobile avec largeur de fenêtre fixe de 3 points
    (F) Dérivée seconde
    (G) Médiane
    (H) Maximum
    J) Différence entre maximum et minimum
    (K) Quotient de la valeur de signal centrale et de la valeur moyenne,

de préférence uniquement les fonctions

    (A) Valeur moyenne mobile
    (B) Variance
    (C) Moyenne mobile avec largeur de fenêtre fixe de 3 points
    (F) Dérivée seconde
    (G) Médiane
    (H) Maximum.

$$\text{Mean} = \bar{x} = \frac{1}{N}\sum_{j=0}^{N-1} x_j \qquad (1)$$

$$\text{Variance} = \frac{1}{N-1}\sum_{j=0}^{N-1} (x_j - \bar{x})^2 \qquad (2)$$

$$\text{Skewness} = \frac{1}{N}\sum_{j=0}^{N-1}\left(\frac{x_j - \bar{x}}{\sqrt{\text{Variance}}}\right)^3 \qquad (3)$$

$$\text{Kurtosis} = \frac{1}{N}\sum_{j=0}^{N-1}\left(\frac{x_j - \bar{x}}{\sqrt{\text{Variance}}}\right)^4 - 3 \qquad (4)$$

**Fig. 1**

EP 3 098 581 B1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

Fig. 18

Fig. 19

Fig. 20

Fig. 21

Fig. 22

19

Fig. 23

Fig. 24

Fig. 25

Fig. 26

Fig. 27

Fig. 28

Fig. 29

Fig. 30

Fig. 31

Fig. 32

Fig. 33

Fig. 34

Fig. 35

Fig. 36

Fig. 37

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10055905 A1
- DE 19617100 B4

- US 20060255249 A1

**In der Beschreibung aufgeführte Nicht-Patentliteratur**

- **VON CHRISTOPHER ROWLANDS ; STEPHEN EL-LIOTT.** *Journal of Raman Spectroscopy,* 2011, vol. 42, 363-369